# EUROPÄISCHE PATENTSCHRIFT

(11) **EP 3 219 401 B1**
(45) Veröffentlichungstag und Bekanntmachung des Hinweises auf die Patenterteilung: **02.10.2019**
(21) Anmeldenummer: 17152740.1
(22) Anmeldetag: 24.01.2017
(51) Int. Cl.: B21C 23/14, B60R 19/34

(54) **STRANGGEPRESSTES PROFIL**
EXTRUDED PROFILE
PROFILÉ EXTRUDÉ

(30) Priorität: 14.03.2016 AT 502102016
(43) Veröffentlichungstag der Anmeldung: 20.09.2017
(73) Patentinhaber: Hammerer Aluminium Industries Extrusion GmbH, 5282 Ranshofen (AT)
(72) Erfinder: Schiffl, Andreas, 5222 Munderfing (AT); Ucsnik, Stephan, 5282 Ranshofen (AT); Hartmann, Matthias, 84359 Simbach am Inn (DE)
(74) Vertreter: Wirnsberger & Lerchbaum Patentanwälte OG

(56) Entgegenhaltungen:
- EP-A1- 0 467 829
- EP-A2- 1 447 283
- US-A1- 2008 122 147
- C. Mattheck ET AL: "Kerbformoptimierung ohne FEM: Ein einfacher Weg, um Kerbspannungen abzubauen", MATERIALWISSENSCHAFT UND WERKSTOFFTECHNIK., vol. 34, no. 5, 1 May 2003 (2003-05-01), pages 514-515, XP055586977, DE ISSN: 0933-5137, DOI: 10.1002/mawe.200390102

## Beschreibung

Die Erfindung betrifft ein stranggepresstes Profil, insbesondere Mehrkammerprofil, umfassend mehrere Teilabschnitte und zumindest einen Übergang, wobei Teilabschnitte durch einen Übergang verbunden sind.

Weiter betrifft die Erfindung eine Verwendung eines solchen stranggepressten Profils.

Des Weiteren betrifft die Erfindung ein Verfahren zur Herstellung eines stranggepressten Profils, wobei eine fließfähige Masse durch eine formgebende Öffnung gepresst wird.

Stranggepresste Profile aus Metall und deren Verwendung als Knautschelemente in beispielsweise einem Fahrzeug sind aus dem Stand der Technik bekannt. Solche Profile können unterschiedliche Querschnittsflächen aufweisen. So können diese beispielsweise mit einem T-förmigen, I-förmigen oder u-förmigen Querschnitt ausgebildet sein. Abhängig von der Querschnittsfläche weist ein Profil üblicherweise zumindest zwei Teilabschnitte auf, welche durch einen Übergang mit einem Winkel von kleiner als 180° zueinander miteinander verbunden sind, insbesondere mit einem Winkel von etwa 90°.

Der Übergang weist üblicherweise den Winkel auf, in welchem Teilabschnitte zueinander angeordnet sind. Schließen beispielsweise zwei Teilabschnitte einen Winkel von etwa 90° zueinander ein, bildet auch der Übergang einen Winkel von etwa 90° aus und bildet eine sogenannte Kerbe. Bei einer Belastung eines solchen Profils treten insbesondere im Übergang zwischen zwei Teilabschnitten bzw. in der Kerbe Spannungsüberhöhungen im Vergleich zum restlichen Profil auf, wodurch das Profil bei beispielsweise einer axialen Belastung im Bereich des Übergangs aufreißt bzw. dessen Tragkraft verliert.

Ein Aufreißen ist jedoch insbesondere bei einer Verwendung des Profils als Knautschelement nicht akzeptabel, da dies ein Energieabsorptionspotenzial beeinträchtigt. Weiter wird durch ein Aufreißen ein weiteres mechanisches Verhalten des Profils unvorhersehbar.

Um das Aufreißen im Bereich des Übergangs zwischen Teilabschnitten zu verhindern, ist es aus dem Stand der Technik bekannt, ein metallisches Profil bzw. ein Gefüge des Materials bereits bei dessen Herstellung positiv zu beeinflussen, beispielsweise durch eine optimierte Wärmebehandlung nach einem Extrusionsprozess bzw. optimierte thermische Bedingungen beim Strangpressen. Darüber hinaus ist es auch bekannt, mechanische Spannungen durch verschiedene mechanische Ansätze zu reduzieren. Dabei wird der Bereich des Übergangs innenseitig beispielsweise viertelkreisfömig ausgebildet, sodass sich keine spitze Kerbe bildet. Allerdings sind hierbei lokale Spannungsüberhöhungen immer noch groß genug, um bei einer Belastung ein Materialversagen hervorzurufen.

Die EP 0 467 829 A1 offenbart ein stranggepresstes Profil gemäß dem Oberbegriff des Anspruchs 1.

Hier setzt die Erfindung an. Aufgabe der Erfindung ist es, ein stranggepresstes Profil der eingangs genannten Art anzugeben, bei welchem lokale Spannungserhöhungen bei insbesondere einer axialen Belastung zumindest deutlich herabgesetzt sind.

Weiter ist es ein Ziel, eine Verwendung eines solchen Profils anzugeben.

Ein weiteres Ziel ist es, ein Verfahren der eingangs genannten Art anzugeben, mit welchem ein stranggepresstes Profil hergestellt werden kann, bei welchem lokale Spannungserhöhungen bei insbesondere einer axialen Belastung desselben zumindest deutlich herabgesetzt werden.

Bei dem Profil weist zumindest ein Übergang variierende Krümmungen auf. Ein damit erzielter Vorteil ist insbesondere darin zu sehen, dass durch die variierenden bzw. unterschiedlich großen Krümmungen bei einer Belastung auftretende Kräfte annähernd gleichmäßig über die belastete Fläche verteilt werden, wodurch eine lokale Spannungserhöhung deutlich herabgesetzt ist. Insbesondere sind die Krümmungen derselben nicht kontinuierlich ausgebildet, sondern weisen ein variierendes Krümmungsmaß auf. Sind zwei Teilabschnitte eines Profils mit einem Winkel von etwa 90° zueinander angeordnet, ist üblicherweise auch der Übergang zwischen Teilabschnitten mit dem entsprechenden Winkel ausgebildet, wodurch eine spitze Kerbe entsteht. Ein Übergang kann beispielsweise zwischen einem Steg und einer Wand oder als Eckensektion eines offenen Profils, Hohlkammer-, Einkammer- oder Mehrkammerprofils ausgebildet sein. Durch eine Abrundung der Kerbe bzw. eine Kerbe mit Krümmungen sind die an derselben auftretenden großen Spannungen bei einer axialen Belastung deutlich herabgesetzt, wenn die Krümmungen variieren bzw. diskontinuierlich ausgebildet sind. Der Übergang ist vollflächig ausgebildet und verbindet insbesondere zwei Teilabschnitte. Insbesondere ist der Übergang in Richtung der Teilabschnitte gekrümmt bzw. ist eine jeweils stärkste Abweichung einer Geraden nahe an den Teilabschnitten angeordnet. Der Übergang ist folglich von einer Kurve mit mehreren unterschiedlichen Krümmungen begrenzt, wobei die Kurve zumindest zwei, insbesondere drei, bevorzugt vier oder mehr, verschiedene Krümmungen aufweist. Die Kurve kann beispielsweise als Ellipse, Tangens, Parabel, Traktroid oder aus Kreisbögen mit unterschiedlichen Radien ausgebildet sein. Der Bereich unter der Kurve ist stets vollflächig mit den Teilabschnitten verbunden bzw. ist der Übergang vollflächig ausgebildet. Das stranggepresste Profil kann aus einem Metall, einer Metalllegierung, einem Kunststoff oder einem Faserverbundwerkstoff gebildet sein.

Der Übergang ist aus mehreren teilweise abgerundeten Dreiecken gebildet, wobei die Dreiecke Inkreise mit unterschiedlichen Radien aufweisen. Die Radien der Innkreise der Dreiecke sind nicht kontinuierlich ausgebildet und lassen sich nicht durch einen Skalar darstellen. Ein dadurch hergestellter Übergang mit variierenden Krümmungen benötigt für deren Beschreibung eine Konstruktionsvorschrift oder eine Formel. Um den durch Dreiecke hergestellten Übergang kantenfrei bzw. abgerundet und mit Krümmungen auszubilden, sind tangentiale Übergänge zwischen Teilabschnitten notwendig, welche beispielsweise durch einen sogenannten Spline herstellbar sind. Erfindungsgemäß sind die Dreiecke aneinander anschließend angeordnet und durch die Methode der Zugdreiecke konstruiert. Es sind somit mehrere Dreiecke zum Ausbilden der Krümmung vorgesehen, zumindest zwei, insbesondere drei, bevorzugt vier oder mehr.

Insbesondere ist der Übergang ungleichmäßig auf den zwei Teilabschnitten verteilt. Dieser kann eine größere Oberfläche eines ersten Teilabschnittes bedecken bzw. weiter in einen ersten Teilabschnitt hineinragen als einen zweiten Teilabschnitt. Eine Länge des Übergangs an den Teilabschnitten ist abhängig von einer Dicke desselben bzw. einer Wandstärke. Beim Konstruieren der Dreiecke kann hierfür ein erstes Dreieck über eine Mitte des Übergangs angeordnet und nur auf einer Seite bzw. in Richtung eines Teilabschnittes weitere Dreiecke daran angeschlossen werden.

Günstig ist es, wenn das Profil zur Energieabsorption ausgebildet ist. Dadurch ist dieses als Knautschelement oder als lasttragendes Strukturelement in beispielsweise einem Fahrzeug, insbesondere Kraftfahrzeug, Schienenfahrzeug oder Flugzeug verwendbar. Eine Belastung des stabförmigen Profils erfolgt üblicherweise in axialer Richtung bzw. entlang dessen Längsachse. Dadurch wird dieses unter Ausbildung von annähernd gleichmäßig angeordneten Falten und frei von Rissen gestaucht, da eine Energieabsorption gleichmäßig vom gesamten Profil erfolgt.

Insbesondere bei einer Ausbildung zur Energieabsorption ist es zweckmäßig, wenn das Profil als Zweikammerprofil mit einer umlaufenden Außenwand und einem Steg ausgebildet ist, wobei der Steg zwischen zwei Teilabschnitten der Außenwand diese verbindend angeordnet ist. Bei einem solchen Profil tritt eine Spannungserhöhung normalerweise beim Übergang des Steges zur Außenwand auf, weshalb diese Übergänge mit variierenden Krümmungen ausgebildet sind. Solche Profile werden beispielsweise parallel zu einer Extrusionsrichtung belastet bzw. gestaucht. Bei einem gestauchten Profil treten Falten auf, welche aufgrund der Ausbildung der Übergänge frei von Rissen oder dergleichen sind.

Besonders bevorzugt ist das Profil aus einem Leichtmetall oder einer Leichtmetalllegierung gebildet. Beim Strangpressen gibt eine formgebende Öffnung, durch welche eine dickflüssige Masse aus beispielsweise Aluminium oder einer Aluminiumlegierung oder Magnesium oder einer Magnesiumlegierung bzw. einem anderen Leichtmetall oder einer Leichtmetalllegierung kontinuierlich gepresst wird, eine Form des Profils und somit auch die Ausbildung bzw. die Krümmungen des Übergangs vor. Dadurch ist das Profil über dessen gesamte Länge mit den gewünschten Krümmungen gleichmäßig herstellbar. Das Profil ist bevorzugt stabförmig ausgebildet, wobei dieses bei einer Verwendung als Knautschelement beispielsweise in Richtung dessen Längsachse belastet wird.

Es ist günstig, wenn der Werkstoff des stranggepressten Profils eine gewisse Duktilität aufweist. Insbesondere bei einer Verwendung des Profils im Automobil-, Flugzeugbereich oder Schienenfahrzeugbau muss ein solches gewissen Anforderungen an Duktilität, Wärmestabilität, Gewicht und Umformbarkeit genügen. Ein stranggepresstes Profil aus Aluminium oder Magnesium bzw. einer Aluminiumlegierung oder Magnesiumlegierung scheint diese Anforderungen besonders gut zu erfüllen. Alternativ erfüllt auch ein stranggepresstes Profil aus einem anderen Leichtmetall oder einer anderen Leichtmetalllegierung diese Anforderungen. Das Profil kann jedoch auch aus einem Kunststoff oder einem Faserverbundwerkstoff oder einem anderen Metall bzw. Metalllegierung gebildet sein.

Eine Verwendung eines erfindungsgemäßen stranggepressten Profils erfolgt mit Vorteil als Knautschelement in einem Beförderungsmittel.

Das verfahrensmäßige Ziel wird durch die Merkmale des Anspruchs 7 erreicht. Dabei ergeben sich die vorstehend erläuterten Vorteile.

Weitere Merkmale, Vorteile und Wirkungen ergeben sich aus dem nachfolgend dargestellten Ausführungsbeispiel. In den Zeichnungen, auf welche dabei Bezug genommen wird, zeigen:
- Fig. 1: einen Querschnitt eines erfindungsgemäßen stranggepressten Profils;
- Fig. 2: ein Foto eines Zweikammerprofils gemäß dem Stand der Technik;
- Fig. 3: Fotos eines gestauchten Profils gemäß Fig. 2;
- Fig. 4: ein Foto eines gestauchten erfindungsgemäßen Profils;
- Fig. 5: eine schematische Darstellung einer Methode der Zugdreiecke;
- Fig. 6: eine schematische Darstellung eines Übergangs nach einer Methode gemäß Fig. 5;
- Fig. 7: ein Foto eines Übergangs eines erfindungsgemäßen Profils;
- Fig. 8: einen Ausschnitt eines Profils gemäß Fig. 7.

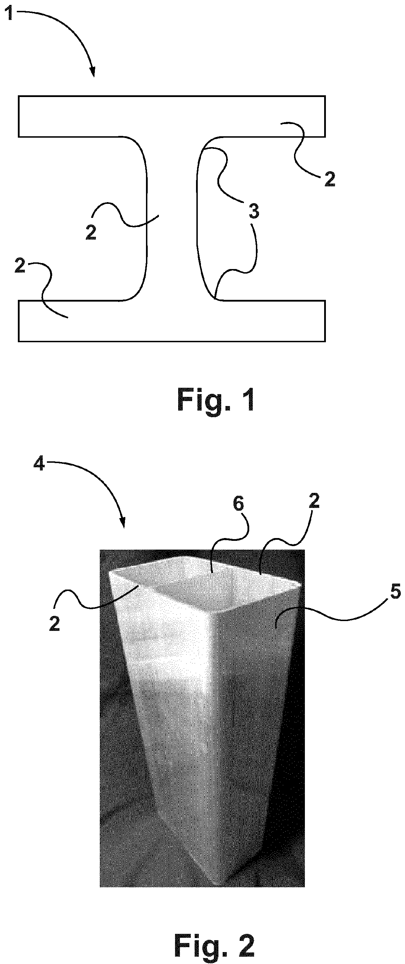

Fig. 1 zeigt einen Querschnitt eines erfindungsgemäßen stranggepressten Profils 1 mit drei Teilabschnitten 2 und Übergängen 3, welche die Teilabschnitte 2 miteinander verbinden. Die Übergänge 3 weisen eine variierende Krümmung auf, um bei einer Belastung des Profils 1 darauf wirkende Kräfte zu verteilen bzw. lokale Spannungserhöhungen zu verhindern. Das Profil 1 ist insbesondere zur Energieabsorption ausgebildet und als Knautschelement oder lasttragendes Strukturelement verwendbar, wobei dieses in axialer Richtung belastet wird. Ein erfindungsgemäßes Profil 1 kann als Einkammerprofil, Mehrkammerprofil, Hohlkammerprofil oder offenes Profil ausgebildet sein. Weiter kann dieses aus einem Metall oder einer Metalllegierung, insbesondere einem Leichtmetall wie Aluminium oder Magnesium oder einer entsprechenden Legierung gebildet sein. Alternativ dazu kann das Profil auch aus einem Kunststoff oder einem Faserverbundwerkstoff gebildet sein.

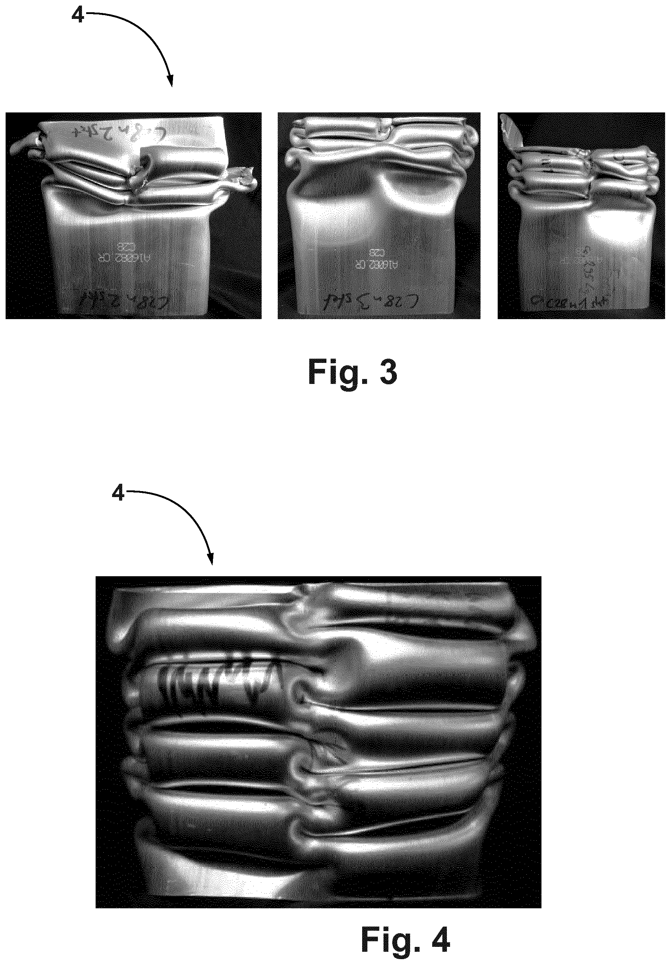

In Fig. 2 ist ein Foto eines Zweikammerprofils 4 gemäß dem Stand der Technik gezeigt, wie dies als Knautschelement verwendet wird. Dieses ist mit einer umlaufenden Außenwand 5 mit vier Teilabschnitten 2 und einem Steg 6 ausgebildet. Der Steg 6 verbindet zwei sich gegenüberliegende Teilabschnitte 2 bzw. teilt die Außenwand 5, sodass ein Zweikammerprofil 4 geschaffen ist. Gemäß dem Stand der Technik sind die Übergänge 3 in einem solchen Zweikammerprofil 4 nicht mit einer variierenden Krümmung ausgebildet. Wird ein solches Zweikammerprofil 4 axial belastet bzw. gestaucht, treten Risse im Zweikammerprofil 4 auf. Dies ist in Fig. 3 gezeigt. Fig. 3 zeigt Fotos von einem aufgrund einer axialen Belastung gestauchten Zweikammerprofils 4 gemäß dem Stand der Technik. Dabei sind drei unterschiedliche Fehlermodi gezeigt. Es ist jedoch ersichtlich, dass ein Riss im Übergang 3 zwischen dem Steg 6 und der Außenwand 5 seinen Ursprung hat. Darüber hinaus ist keine gleichmäßige Faltung ersichtlich. Weiter ist eine Form eines gestauchten Profils auch nicht vorhersehbar.

Fig. 4 zeigt im Gegensatz dazu ein Foto eines gestauchten erfindungsgemäßen Zweikammerprofils 4, bei welchem die Übergänge 3 gemäß Fig. 1 mit variierenden Krümmungen ausgebildet sind. Es ist ersichtlich, dass entstehende Falten progressiv von oben nach unten durchgehen. Ebenfalls erkennbar ist das gewünschte Verhalten, dass die Falten beidseitig immer um eine halbe Faltenlänge versetzt zueinander angeordnet sind. Darüber hinaus ist ein gestauchtes erfindungsgemäßes Zweikammerprofil 4 nahezu frei von Rissen.

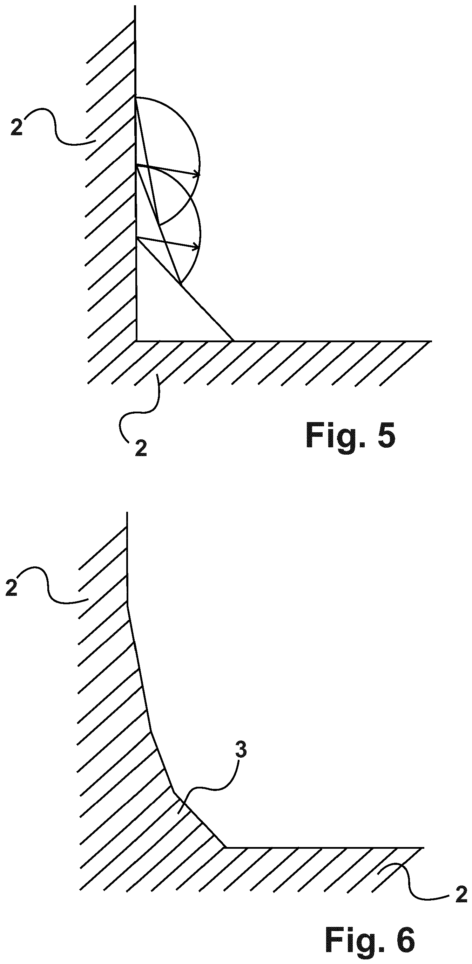

In Fig. 5 ist schematisch eine Methode zur Schaffung der variierenden Krümmungen des Übergangs 3 gezeigt. Dies ist die Methode der Zugdreiecke. Damit wird ein Übergang 3 aus mehreren Dreiecken gebildet, wobei die Dreiecke Inkreise mit unterschiedlichen Radien aufweisen. Der strichlierte Bereich stellt einen Ausschnitt des Übergangs 3 von Teilabschnitten 2 dar. In einem ersten Schritt wird ein gleichschenkliges, rechtwinkliges Dreieck in den Übergang 3 eingezeichnet. Dabei scheint eine Länge der Katheten ausschlaggebend zu sein. Diese ist abhängig von einer Wandstärke der Teilabschnitte 2 und wird entsprechend festgelegt. In einem zweiten Schritt wird ausgehend von der Mitte der Hypotenuse ein gleichschenkliges Dreieck an den vertikal ausgerichteten Teilabschnitt 2 eingezeichnet. Die Länge der Schenkel entspricht der halben Hypotenuse des ersten Dreiecks. Die Schenkellänge wurde in der Fig. 5 mit einem Zirkel bestimmt, weshalb die dargestellten Kreissegmente lediglich Konstruktionshilfen sind. In einem dritten Schritt wird der zweite Schritt wiederholt. Allerdings ist das Ausgangsdreieck nicht mehr rechtwinklig. Es wird die halbe Länge der außen liegenden Seite mit einem Zirkel abgegriffen und der Schnittpunkt an der vertikalen Wand bestimmt. Diese Schritte können beliebig oft wiederholt werden. Fig. 6 zeigt einen daraus resultierenden Übergang 3. Die Darstellung ist schematischer Natur, da in einer realen Konstruktion tangentiale Übergänge notwendig sind. In einem Konstruktionsprogramm werden beispielsweise Punkte beschrieben und über einen sogenannten Spline verbunden.

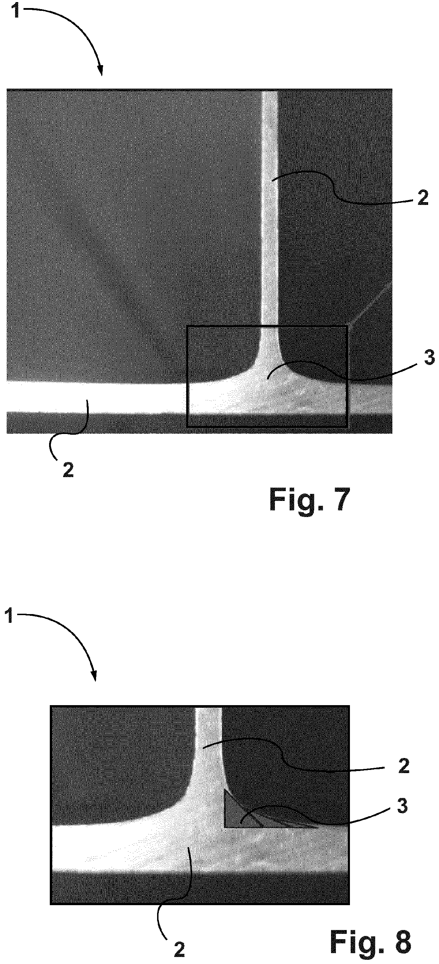

Fig. 7 zeigt ein Foto eines Ausschnittes eines Profils 1, welches einen durch die Methode der Ziehdreiecke hergestellten Übergang 3 umfasst. Teilabschnitte 2 sind über den Übergang 3 verbunden, wobei der Übergang 3 aus mehreren teilweise abgerundeten Dreiecken gebildet ist, wobei die Dreiecke Inkreise mit unterschiedlichen Radien aufweisen. Der Übergang 3 weist somit variierende bzw. diskontinuierliche Krümmungen auf. In Fig. 8 ist ein Ausschnitt aus Fig. 7 gezeigt, wobei die Dreiecke in den Übergang 3 eingezeichnet sind.

## Patentansprüche

1. Stranggepresstes Profil (1), insbesondere Mehrkammerprofil, umfassend mehrere Teilabschnitte (2) und zumindest einen Übergang (3), wobei Teilabschnitte (2) durch einen Übergang (3) verbunden sind, wobei der Übergang (3) variierende Krümmungen aufweist und aus mehreren teilweise abgerundeten Dreiecken gebildet ist, wobei die Dreiecke Inkreise mit unterschiedlichen Radien aufweisen, **dadurch gekennzeichnet, dass** die Dreiecke aneinander anschließend angeordnet und durch die Methode der Zugdreiecke konstruiert sind.

2. Stranggepresstes Profil (1) nach Anspruch 1, **dadurch gekennzeichnet, dass** das Profil (1) als Zweikammerprofil (4) mit einer umlaufenden Außenwand (5) und einem Steg (6) ausgebildet ist, wobei der Steg (6) zwischen zwei Teilabschnitten (2) der Außenwand (5) diese verbindend angeordnet ist.

3. Stranggepresstes Profil (1) nach einem der Ansprüche 1 bis 2, **dadurch gekennzeichnet, dass** das Profil (1) aus einem Leichtmetall oder einer Leichtmetalllegierung gebildet ist.

4. Verwendung eines stranggepressten Profils (1) nach einem der Ansprüche 1 bis 3 zur Energieabsorption.

5. Verwendung eines stranggepressten Profils (1) nach einem der Ansprüche 1 bis 3 als Knautschelement in einem Beförderungsmittel.

6. Verfahren zur Herstellung eines stranggepressten Profils (1) nach einem der Ansprüche 1 bis 3, wobei eine fließfähige Masse durch eine formgebende Öffnung gepresst wird, **dadurch gekennzeichnet, dass** eine Form von zumindest einem Übergang (3) zwischen Teilabschnitten (2) des Profils (1) mit variierenden Krümmungen durch die formgebende Öffnung vorgegeben wird.

## Claims

1. Extruded profile (1), in particular multi-chamber profile, comprising several sections (2) and at least one junction (3), wherein sections (2) are connected by a junction (3), wherein the junction (3) comprises varying curvatures and is formed of several partially rounded-off triangles wherein the triangles have in-circles with different radii, **characterised in that** the triangles are arranged adjoining each other and are designed by way of the traction triangle method.

2. Extruded profile (1) according to claim 1, **characterised in that** the profile (1) is designed as a two-chamber profile (4) with a circumferential outer wall (5) and a crosspiece (6), wherein the crosspiece (6) is arranged between two sections (2) of the outer wall (5) connecting them.

3. Extruded profile (1) according to any one of claims 1 to 2, **characterised in that** the profile (1) is made of a light metal or a light metal alloy.

4. Use of the extruded profile (1) according to any one of claims 1 to 3 for energy absorption.

5. Use of an extruded profile (1) according to any one of claims 1 to 3 as a deformation element in a means of transport.

6. Method of producing an extruded profile (1) according to any one of claims 1 to 3, wherein a flowable mass is pressed through a shaping-giving opening, **characterised in that** the shape of at least one junction (3) between sections (2) of the profile (1) with various curvatures is predefined by the shape-giving opening.

## Revendications

1. Profilé extrudé (1), en particulier profilé à chambres multiples, comprenant plusieurs tronçons (2) et au moins une jonction (3), dans lequel des tronçons (2) sont reliés par une jonction (3), dans lequel la jonction (3) présente des courbes variant et est formée par plusieurs triangles partiellement arrondis, dans lequel les triangles présentent des cercles inscrits avec des rayons différents, **caractérisé en ce que** les triangles sont disposés de manière adjacente les uns aux autres et sont conçus selon la méthode des triangles sollicités en traction.

2. Profilé extrudé (1) selon la revendication 1, **caractérisé en ce que** le profilé (1) est réalisé en tant que profilé à deux chambres (4) avec une paroi extérieure périphérique (5) et une nervure (6), dans lequel la nervure (6) est disposée entre deux tronçons (2) de la paroi extérieure (5) en reliant ceux-ci.

3. Profilé extrudé (1) selon l'une des revendications 1 à 2, **caractérisé en ce que** le profilé (1) est formé par un métal léger ou un alliage de métaux légers.

4. Utilisation d'un profilé extrudé (1) selon l'une des revendications 1 à 3 pour l'absorption d'énergie.

5. Utilisation d'un profilé extrudé (1) selon l'une des revendications 1 à 3 en tant qu'élément déformable dans un moyen de transport.

6. Procédé pour la fabrication d'un profilé extrudé (1) selon l'une des revendications 1 à 3, dans lequel une masse coulante est pressée à travers une ouverture conférant une forme, **caractérisé en ce qu'**une forme d'au moins une jonction (3) entre des tronçons (2) du profilé (1) avec des courbes variant est prescrite par l'ouverture conférant une forme.
